(19) Europäisches Patentamt / European Patent Office / Office européen des brevets

(11) **EP 2 434 310 B1**

(12) **FASCICULE DE BREVET EUROPEEN**

(45) Date de publication et mention
de la délivrance du brevet:
**05.08.2015 Bulletin 2015/32**

(51) Int Cl.:
*G01S 13/93* *(2006.01)*     *H01Q 3/26* *(2006.01)*
*G01S 13/44* *(2006.01)*

(21) Numéro de dépôt: **11183055.0**

(22) Date de dépôt: **28.09.2011**

(54) **Radar à grande couverture angulaire, notamment pour la fonction d'évitement d'obstacle à bord d'aéronefs autopilotés**

Radar mit großer Winkelabdeckung an Bord von Flugzeugen mit Autopilot, insbesondere zum Ausweichen von Hindernissen

Radar with wide angular coverage, in particular for the obstacle-avoiding function, on-board autopiloted aircraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.09.2010 FR 1003834**

(43) Date de publication de la demande:
**28.03.2012 Bulletin 2012/13**

(73) Titulaire: **Thales
92200 Neuilly Sur Seine (FR)**

(72) Inventeurs:
• **Kemkemian, Stéphane**
  **78851 Elancourt Cedex (FR)**
• **Cornic, Pascal**
  **78851 Elancourt Cedex (FR)**
• **Garrec, Patrick**
  **78851 Elancourt Cedex (FR)**
• **Le Bihan, Patrick**
  **78851 Elancourt Cedex (FR)**
• **Nouvel-Fiani, Myriam**
  **78851 Elancourt Cedex (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

EP-A1- 2 192 418     FR-A1- 2 950 148
US-A- 5 481 270

• MORTON T E ET AL: "Performance analysis of conformal conical arrays for airborne vehicles", IEEE TRANSACTIONS ON AEROSPACE AND ELECTRONIC SYSTEMS, IEEE SERVICE CENTER, PISCATAWAY, NJ, US, vol. 42, no. 3, 1 juillet 2006 (2006-07-01), pages 876-890, XP011150661, ISSN: 0018-9251, DOI: 10.1109/TAES.2006.248218
• MUCCI R A ET AL: "Constrained Least-Squares Synthesis of Coefficients for Arrays of Sensors and FIR Digital Filters", IEEE TRANSACTIONS ON AEROSPACE AND ELECTRONIC SYSTEMS, IEEE SERVICE CENTER, PISCATAWAY, NJ, US, vol. AES-10, no. 2, 1 mars 1976 (1976-03-01), pages 195-202, XP011166130, ISSN: 0018-9251
• S.D. BLUNT ET AL: "Adaptive pulse compression via MMSE estimation", IEEE TRANSACTIONS ON AEROSPACE AND ELECTRONIC SYSTEMS, vol. 42, no. 2, 1 avril 2006 (2006-04-01), pages 572-584, XP055003560, ISSN: 0018-9251, DOI: 10.1109/TAES.2006.1642573
• BERIZZI F ET AL: "On the Fractal Dimension of Sea Surface Backscattered Signal at Low Grazing Angle", IEEE TRANSACTIONS ON ANTENNAS AND PROPAGATION, IEEE SERVICE CENTER, PISCATAWAY, NJ, US, vol. 52, no. 5, 1 mai 2004 (2004-05-01), pages 1193-1204, XP011112536, ISSN: 0018-926X, DOI: DOI:10.1109/TAP. 2004.827533

(56) Documents cités:

**Description**

La présente invention concerne un système radar à grande couverture angulaire, notamment pour la fonction d'évitement d'obstacle à bord d'aéronefs autopilotés.

Il est connu d'utiliser une fonction radar de détection d'obstacles aériens non coopérative pour aéronefs, en particulier pour équiper les drones. Cette fonction est essentielle pour permettre l'insertion d'aéronefs auto-pilotés dans le domaine aérien non ségrégué. Elle participe à la fonction d'évitement d'obstacle connue sous le nom de « Sense and Avoid » (S&A).

Un tel radar doit disposer d'un très large champ d'observation (typiquement $\pm 110°$ en azimut et $\pm 15°$ en élévation) et doit être capable de balayer l'espace en un temps très court, de l'ordre de grandeur de la seconde, compte tenu du temps nécessaire pour engager une manoeuvre d'évitement en présence de risques de collision. Ces caractéristiques correspondent approximativement à la capacité d'observation de l'environnement d'un pilote « humain » (« See and Avoid »). Pour une telle application, Il est intéressant d'utiliser une antenne ou plusieurs antennes à champ large en émission, une pluralité d'antennes peu directives en réception et de former, en réception, de multiples faisceaux simultanément dans le domaine éclairé: il s'agit de la technique connue de l'homme de l'art sous le nom de « Formation de Faisceau par le Calcul » ou « FFC ». Cette solution est classiquement mise en oeuvre à l'aide de réseaux plans d'antennes dont les diagrammes formés doivent avoir une directivité suffisante pour localiser les cibles avec une bonne précision.

Une partie des points précédents peut être résolue par les solutions décrites dans les demandes de brevets FR09 04395, FR09 04224, FR09 04394 et FR09 04880.

Dans la demande de brevet FR09 04395, on résout le problème général du système radar en introduisant, dans sa solution préférentielle, une double forme d'onde gérée de manière adaptative :

- les cibles rapides sont détectées à grande distance par une forme d'onde sans ambiguïté Doppler où ces cibles rapides sont détectables sur bruit thermique après filtrage Doppler ;

- les cibles proches ou lentes sous fouillis sont détectées par une forme d'onde adaptée à la visibilité sous fouillis de sol :

    - Elle est non ambiguë, ni en distance, ni en vitesse (les cibles concernées sont proches et lentes).

    - C'est préférentiellement une forme d'onde à « haute » résolution distance (pouvoir séparateur en distance).

Dans la demande de brevet FR09 04224, on résout les problèmes liés au système d'antenne en utilisant, dans sa solution préférentielle, une configuration « d'antennes séparées en croix » associée à un principe de « coloration » de l'espace à l'émission et à l'utilisation de la Formation de Faisceau par Calcul (FFC) en réception. La coloration de l'espace consiste à émettre sur N antennes d'émission N signaux orthogonaux. Ces signaux sont ensuite séparés par filtrage à la réception compte-tenu de leurs propriétés d'orthogonalité. Il est par exemple possible, avec deux antennes contiguës en émission associées à deux ou plus codes orthogonaux de réaliser à l'émission l'équivalent fonctionnel d'un système de mesure angulaire « mono-pulse ».

Dans le cas de la solution préférentielle décrite dans la demande de brevet FR09 04224, les deux générateurs de forme d'onde (GFO) sont successivement connectés à trois réseaux, un réseau est constitué d'une paire d'antennes orienté vers trois sites différents pour couvrir le domaine en site. Cette demande de brevet propose une alternative à l'utilisation de trois réseaux commutés en introduisant, notamment dans la partie « émission », un balayage électronique discret sur trois directions grâce à des commutateurs agissant à bas niveau (avant l'étage de puissance). Cette commutation peut employer, par exemple, des lignes à retard court-circuités par des diodes PIN ou des dispositifs à MEMs.

La demande de brevet FR09 04394 décrit notamment des formes d'onde et les principes de traitement de signal pour exploiter au mieux la configuration d'antenne décrite dans la demande de brevet FR09 04224 et en prenant en compte le caractère adaptatif du choix des formes d'onde décrit dans la demande de brevet FR09 04395.

La demande de brevet FR09 04880 améliore la précision de mesure angulaire du système décrit dans la demande de brevet FR09 04224. Cette solution consiste notamment à associer simultanément :

- un interféromètre précis mais ambigu à la réception ;
- un principe de coloration de l'espace à l'émission.

C'est la combinaison des mesures angulaires issues de l'interféromètre, précises mais ambiguës, et du système de coloration de l'espace qui permet finalement d'obtenir des mesures angulaires précises et sans ambiguïté grâce au système dit « mono-pulse à l'émission », avec la coloration à l'émission, qui est utilisé pour mesurer au moins le rang d'ambiguïté de la mesure angulaire fournie par l'interféromètre.

Un exemple de réalisation selon les demandes de brevets précitées a été présenté lors de la conférence « IRS 2010 » le 17 juin 2010 « A MIMO Radar for Sense and Avoid Function - A fully static solution for UAV » par Stéphane KEMKEMIAN et Al.

Si les antennes de réception sont des réseaux linéaires, leur couverture en azimut est limitée en général à $\pm 60°$ par rapport à la normale au réseau, voire plus, en acceptant une dégradation de performances. Cette couverture est insuffisante vis à vis du besoin exprimé précédemment (couverture de $\pm 110°$ en azimut). Dans ces conditions, deux disposit ifs précédents sont nécessaires, chacun ne couvrant au maximum qu'environ $\pm 60°$ et chacun étant orienté vers une direction particulière.

Ces deux dispositifs peuvent travailler en alternance ou bien simultanément:

- Dans le premier cas, chaque système ne travaille que 50% du temps. Toutes autres choses égales, il s'ensuit une perte de 3 dB due à la réduction du temps d'intégration des signaux ;

- Dans le second cas, en supposant que les conditions nécessaires au fonctionnement simultané sont remplies, il n'y a pas de perte sur chacun des deux dispositifs, en revanche la puissance émise est doublée. Si on raisonne à puissance totale émise constante (donc à consommation sur le réseau électrique de bord constante), on aura également une perte de 3 dB.

De plus, dans les deux cas, l'encombrement à bord du drone est doublé.

Un but de l'invention est de conserver le même rendement énergétique :

- en acceptant une augmentation de taille des seules antennes de réception ;

- en conservant une unique antenne d'émission ;

- en augmentant la couverture angulaire d'un unique système jusqu'à $\pm 110°$ en azimut.

On est donc en présence d'un unique radar et non d'un système doublé comme dans le cas précédent où les antennes de réception sont parfaitement linéaires.

Le principe de localisation verticale décrite notamment dans la demande de brevet FR09 04880 est conservé. Il est de même quant à l'utilisation de la Formation de Faisceau par Calcul dans le plan horizontal décrite notamment dans les demandes de brevets FR09 04224, FR09 04394 et FR09 04880.

A cet effet, l'invention a pour objet un système radar comportant au moins une antenne d'émission et une antenne de réception formée d'un réseau d'éléments rayonnants, la configuration du réseau étant caractérisée par un jeu de paramètres déterminant sa forme géométrique, le nombre d'éléments rayonnants et le pas entre les éléments rayonnants, les faisceaux d'antenne étant calculés dans P directions par une fonction de FFC. Le diagramme de rayonnement de ladite antenne est déterminé pour maximiser le gain d'antenne, la configuration du réseau étant définie selon les étapes suivantes :

- dans une étape préliminaire, une configuration de base dudit réseau est choisie ;
- dans une première étape on détermine le signal attendu d'une cible dans lesdites P directions ;
- dans une deuxième étape on détermine la sommation, pour chacune desdites P directions, des signaux reçus par chaque élément rayonnant de façon à maximaliser le rapport signal sur bruit en sortie de ladite sommation ;
- dans une troisième étape on calcule un facteur de qualité fonction des rapports signal sur bruit S/ B reçus sur lesdites P directions
- dans une quatrième étape on fait varier les paramètres du réseau puis on reboucle sur la première ou la deuxième étape selon les paramètres du réseau qui ont été modifiés, la configuration étant choisie parmi les configurations comme étant celle qui maximalise le facteur de qualité.

La configuration de base du réseau est par exemple un polyèdre, un dièdre ou encore une courbe continue dans le plan d'azimut relatif au radar. L'antenne d'émission couvre par exemple régulièrement la zone à couvrir en azimut.

Le facteur de qualité est par exemple fonction d'un critère de régularité angulaire du gain d'antenne de réception ou rapport signal sur bruit reçu sur une plage angulaire donnée.

Le facteur de qualité peut en outre être fonction de conditions éliminatoires n'assurant pas une couverture minimale de certaines directions dans le domaine de détection radar.

Les possibles détections d'une cible par les lobes secondaires d'un ou plusieurs faisceaux formés par FFC sont par exemple traitées par un algorithme basé sur la comparaison des niveaux reçus dans une cellule de résolution distance-vitesse du radar, une seule détection au maximum n'étant possible par cellule de résolution distance-vitesse.

On fait par exemple l'hypothèse qu'il ne peut exister de manière probable plus d'un écho de rapport signal sur bruit S/B suffisant pour qu'il soit détectable, pour une cellule de résolution donnée du radar, soit en vitesse, soit en distance ou soit en distance-vitesse selon le traitement mis en oeuvre. Dans un autre mode de mise en oeuvre possible, s'il y a plus d'un écho détectable par cellule de résolution parmi la pluralité de faisceaux formés par FFC, seul est considéré valide l'écho et la FFC qui procurent le maximum de puissance ou le maximum de rapport signal sur bruit S/B.

La direction angulaire de la cible est par exemple obtenue par une technique analogue à la technique monopulse, la direction précise étant fonction du signal reçu dans le lobe de FFC où le maximum de signal a été observé et sur au moins l'un des lobes adjacents.

La direction angulaire précise de la cible est par exemple obtenue par une technique analogue à la technique monopulse en utilisant deux lobes FFC, le lobe où le signal reçu est maximum et le lobe à proximité immédiate où le signal est de puissance juste inférieure au maximum.

Avantageusement, le système selon l'invention équipe un aéronef pour assurer une fonction d'évitement d'obstacle, cet aéronef étant par exemple autopiloté.

D'autres caractéristiques et avantages de l'invention apparaîtront à l'aide de la description qui suit, faite en regard des dessins annexés qui représentent :

- les figures 1 et 2, un exemple de système radar représenté notamment par ses parties émission et réception ;
- la figure 3, des exemples de configurations de réseau d'antenne utilisé dans un radar selon l'invention ;
- la figure 4, les grandes étapes de d'obtention d'un réseau d'antenne utilisée dans un radar selon l'invention ;
- la figure 5, une illustration des gains appliqués aux éléments de sous-réseaux en fonction de la direction de FFC ;
- la figure 6, une illustration plus détaillées des étapes d'obtention du réseau d'antenne ;
- la figure 7, un exemple de réseau d'antenne en dièdre dans le plan d'azimut du radar ;
- la figure 8, une vue de dessus d'un réseau en dièdre à optimiser ;
- les figures 9a à 9d, une illustration des gains maximum et portées normalisées respectivement pour les quatre angles suivants de pliure du dièdre précédent : 0°, 15°, 30°et 45°;
- la figure 10, un exemple de diagramme de rayonnement ;
- la figure 11, les FFC de deux faisceaux.

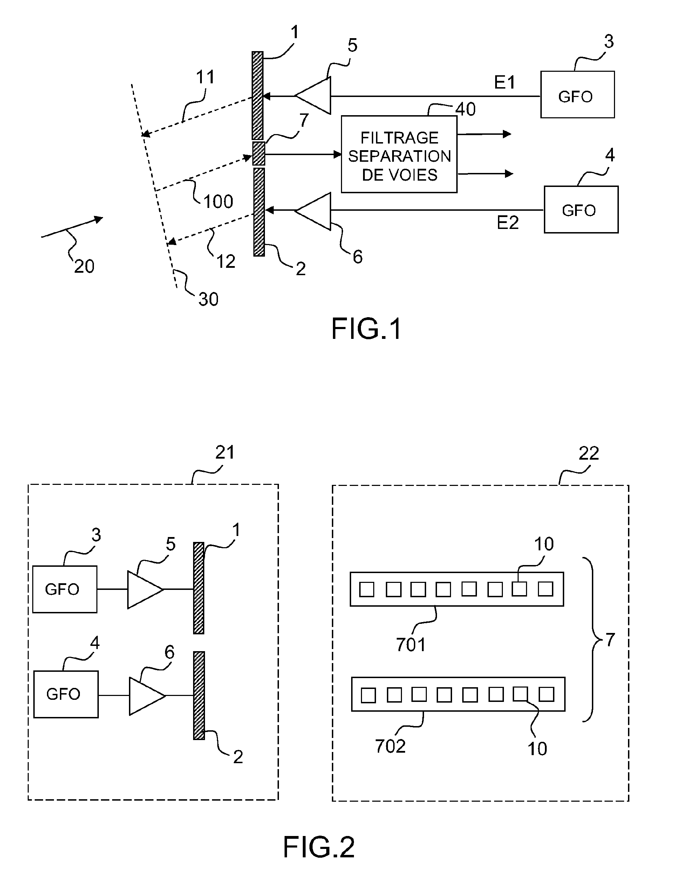

Les figures 1 et 2 illustrent le système d'émission et de réception utilisés dans la demande de brevet FR09 04880.

Le système associe notamment :

- un interféromètre précis mais ambigu à la réception, l'antenne de réception de cet interféromètre constituant l'antenne de réception du radar ;
- un mode de coloration de l'espace à l'émission.

La coloration de l'espace consiste à émettre sur N antennes d'émission N signaux orthogonaux. Ces signaux sont ensuite séparés par filtrage 40 à la réception à partir de leurs propriétés d'orthogonalité.

La figure 1 illustre un exemple de réalisation où N = 2. Le système d'émission comporte deux antennes d'émission contigües 1, 2 associées chacune à un code, l'ensemble de ces deux antennes formant une antenne d'émission. La première antenne 1 est ainsi associée à un premier code E1 et la deuxième antenne est ainsi associée à un deuxième code E2, les deux codes étant orthogonaux entre eux, donc séparables par filtrage. Il est alors possible de réaliser, avec une seule antenne de réception, une mesure angulaire « mono-pulse » en créant par traitement deux voies de réception, l'une adaptée à la réception du code E1, l'autre adaptée à la réception du code E2. On a ainsi constitué un système « monopulse à l'émission ».

Un premier générateur de forme d'onde 3 fournit un signal d'émission émis selon le code E1, ce signal est ensuite amplifié par un amplificateur de puissance 5 avant d'être délivré à la première antenne 1. Un deuxième générateur de forme d'onde 4 fournit un signal d'émission émis selon le code E2, ce signal est ensuite amplifié par un amplificateur de puissance 6 avant d'être délivré à la deuxième antenne 2. Les fonctions de codage sont par exemple intégrées dans les générateurs de forme d'onde 3, 4.

Les signaux d'émission 11, 12 sont émis par chaque moitié 1, 2 de l'antenne d'émission. La figure 1 illustre la progression d'une onde émise dans une direction donnée 20 selon la progression du plan de phase 30.

Un signal de réception 100 est par exemple reçu dans cette direction 20. Ce signal est reçu par une antenne de réception 7.

La figure 2 présente par un schéma synoptique la partie émission 21 et la partie réception 22 du système d'émission et de réception utilisées par un radar selon l'invention. La partie émission comporte les générateurs de formes d'onde 3, 4 et les amplificateurs 5, 6 associés à chaque antenne 1, 2 telles que décrites relativement à la figure 1. La partie réception comporte deux antennes réseau 701, 702 constituées d'éléments rayonnants 10, ces deux antennes formant le système d'interférométrie. On suppose que les deux antennes sont constituées chacune de M éléments rayonnants 10. L'identité des deux antennes d'interférométrie n'est pas nécessaire, mais l'utilisation d'antennes différentes peut compliquer la mise en oeuvre du système. On peut noter que l'invention s'applique également en n'utilisant pas d'interférométrie verticale en réception, c'est-à-dire dans le cas où l'on dispose d'une unique antenne en réception. Chaque antenne du système d'interférométrie est désignée par la suite sous le terme de réseau.

La demande de brevet FR09 04394 utilise deux formes d'onde de natures très distinctes :

- une première forme d'onde sans ambiguïté en vitesse, optimisée pour les cibles rapides situées en dehors de la zone Doppler du fouillis de sol et pour lesquelles une grande portée de détection est requise ;
- une seconde forme d'onde adaptée aux cibles lentes situées dans la zone Doppler du fouillis de sol pour lesquelles une grande portée n'est pas le critère dimensionnant mais l'aptitude à détecter ces cibles potentiellement noyées dans le fouillis de sol.

L'invention utilise, de façon préférentielle dans le cas de la première forme d'onde pour cibles rapides, la totalité des éléments 10 de réception du réseau pour réaliser une formation de faisceaux par calcul (FFC) dans le plan circulaire du réseau qui maximalise le rapport signal sur bruit dans P directions particulières sans se préoccuper de la qualité du diagramme de lobes secondaires de ces faisceaux ainsi formés. En d'autres termes, si on s'intéresse à la direction d'azimut $\psi_1$, le niveau de lobes secondaires dans une direction $\psi_2$ très différente de $\psi_1$ n'importe pas.

Par ailleurs, toujours dans le cas de la première forme d'onde pour cibles rapides, l'invention applique un traitement particulier permettant de s'affranchir de la mauvaise qualité possible des P diagrammes formés par FFC. En particulier, les formes d'ondes employées décrites notamment dans la demande de brevet FR09 04394 sont des formes d'onde à haute résolution Doppler et/ou distance. Comme l'invention est appliquée dans une zone Doppler hors fouillis de sol, seules des cibles assez rapides, utiles ou non, peuvent être présentes dans le domaine Distance-Vitesse traité.

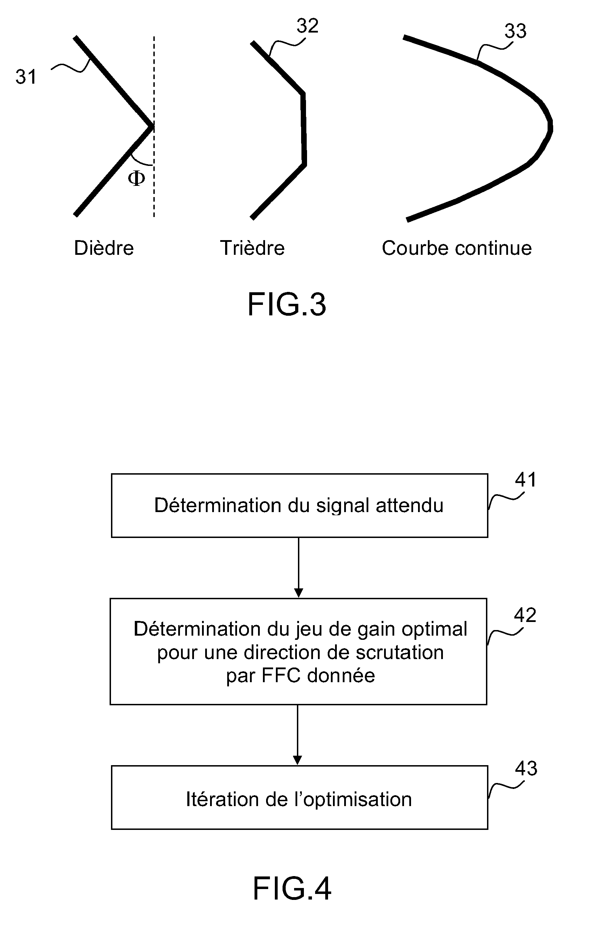

La figure 3 illustre des exemples de réalisation possible d'un réseau 10, représentés par des courbes dans le plan d'azimut. Dans le cas général, un réseau n'est ni plan, ni linéaire et n'est pas obligatoirement uniformément réparti puisque l'on cherche à couvrir le maximum d'espace en azimut. Dans le cas de la première forme d'onde pour cibles rapides, on n'utilise pas notamment une commutation de segments linéaires en fonction de la direction observée. En d'autres termes, il peut s'agit d'un réseau qui n'est pas du type « ULA » (Uniform Linear Array). La figure 3 présente par des vues de dessus trois exemples de réseau 10. Les deux premiers exemples ont la forme d'un polyèdre, un dièdre pour le premier 31 et un trièdre pour le deuxième 32. Le troisième exemple 33 présente une courbe continue.

On utilisera par la suite, les notations suivantes :

- Le symbole • désigne le produit scalaire de deux vecteurs.
- $A^T$: matrice ou vecteur transposé de *A*.
- $\overline{A}$ : Conjugué complexe de A.
- $A^H$ : matrice ou vecteur transposé et conjugué de *A*.
- $k \in [1,P]$, l'indice d'une des P directions de Formation de Faisceau par Calcul. Après le processus de FFC, un « diagramme angulaire » discret du signal reçu est formé sur *P* directions.
- $i \in [1,M]$, l'indice d'un élément du réseau de M éléments. Si M < P, la FFC est sur-échantillonnée. Si *M* > *P,* la FFC est sous-échantillonnée : tous les signaux ne seront pas interceptés.
- $X$ = vecteur des observations : signaux reçus $x_i$ par les M éléments : $\boldsymbol{X} = [x_1...x_M]^T$.
- $S(k)$ = vecteur des signaux attendus *a priori* pour un signal provenant de la $k^{ième}$ direction de FFC : $S(k) = [s_1(k)...s_M(k)]^T$.
- $W$ = vecteur des gains $w_i$ servant à pondérer les observations $x_i$ pour former, par FFC, le faisceau dans la $k^{ième}$ direction de FFC : $\boldsymbol{W}(k) = [w_1(k)...w_M(k)]^T$.
- Soit $\boldsymbol{n}$ : vecteur des $n_i$ contributions de bruit par les i = 1, ... M éléments du réseau.
- Soit $\boldsymbol{R} = E\{\boldsymbol{n}.\boldsymbol{n}^H\}$ : Matrice de covariance (*M* x *M*) des bruits reçus par les *M* éléments du réseau.

Dans le cas de la première forme d'onde (cible sur bruit thermique et pas d'interférence externe), tous les bruits sont supposés indépendants. Dans ce cas : $\boldsymbol{R} = \sigma^2\boldsymbol{I}$, où $\sigma^2$ est la puissance du bruit thermique sur une voie de réception (supposée identique pour toutes les sources) et *I* est la matrice identité de dimension *M*. Ce n'est pas le cas de la $2^{nde}$ forme d'onde où on se trouve sur fouillis.

Le but du choix de la configuration du réseau, telle qu'illustré par la figure 3, est d'obtenir, pour la première forme d'onde « cibles rapides » et par FFC, le Rapport Signal à Bruit le plus élevé possible à l'intérieur d'un domaine d'observations angulaires possibles très étendu, à flux de puissance incident donné constant. Pour cela, l'un des objectifs de l'invention est de choisir une forme de ce réseau et une répartition des poids affectés à chaque élément du réseau dans le processus de FFC afin de maximaliser un facteur de qualité qui quantifie ce qui vient d'être mentionné précédemment.

Dans le cas général, ce facteur de qualité est fonction des rapports S/B reçus sur les *P* directions scrutées.

Dans le cas où la détection a lieu sur bruit thermique, ceci revient à calculer une fonction des gains d'antenne après FFC dans les *P* directions. On suppose dans ce cas que les bruits thermiques des M sources du réseau ont la même puissance et sont décorrélés.

Par exemple, on peut citer deux types de facteurs de qualité:

1. Type de facteur 1 : Régularité du rapport S/B dans le domaine de scrutation :

$$Q = \frac{1}{P} \sum_{k=1}^{P} \beta_k . SNR(\psi_k) \; ;$$

2. Type de facteur 2 : Critère éliminatoire si certaines directions ne sont pas couvertes et critère de régularité dans le domaine de scrutation : $Q = \left( \prod_{k=1}^{P} \beta_k . SNR(\psi_k) \right)^{\frac{1}{P}}$ .

$\beta_k$ est un facteur de pondération associé à la $k^{ième}$ direction destiné à privilégier ou non certaines directions. De multiples autres critères peuvent être formés.

Comme il a été indiqué précédemment, ce choix d'optimisation ne prend pas en compte l'aspect qualité du diagramme d'antenne formé. L'exemple de réalisation qui suit montre comment cet aspect est pris en compte sans que la fonctionnalité opérationnelle du radar soit altérée.

La figure 4 illustre trois étapes possibles pour l'optimisation de la première forme d'onde, pour cibles rapides. La forme du réseau (dièdre 31, trièdre 32, courbe continue 33 ...) et le réglage des coefficients de gain dans la FFC sont déterminés pour maximaliser le facteur de qualité défini précédemment. Le processus d'optimisation permettant notamment de définir la forme du réseau et le poids des éléments, est itératif. Des aspects relatifs à la faisabilité mécanique des antennes peuvent également être pris en compte.

Le processus d'optimisation comporte par exemple les étapes suivantes :

- une première étape 41 de détermination du signal attendu ;
- une deuxième étape 42 de détermination du jeu de gain optimal pour une direction de scrutation par FFC donnée ;
- une troisième étape 43 d'itération de l'optimisation.

Dans la première étape 41, on détermine donc le signal attendu. Les caractéristiques du réseau 31, 32, 33 étant connues par construction, pour la pluralité de P directions à scruter à la réception par FFC, on détermine par calcul ou par simulation électromagnétique préalable à la réalisation du matériel, les P vecteurs indicés S(k) de signal attendu.

Chacun de ces vecteurs est un vecteur colonne à M éléments correspondant aux M éléments du réseau. Pour réaliser le calcul, on simule une source positionnée successivement dans les P directions, virtuellement située à l'infini et produisant le même flux de puissance au droit du réseau quelle que soit la direction de cette source. La méthode de calcul du vecteur reçu par les éléments du réseau est bien connue de l'homme du métier.

Le signal « attendu » peut être représenté sous la forme générique suivante.

- Soit un point origine de référence O (qui peut être arbitraire, mais identique pour tous les éléments).

- Soit $M_i$ est la position du centre de phase de l'élément de rang «i».

- Soit $\vec{u}(k)$ le vecteur directeur de la $k^{ième}$ des P directions à scruter.

Le signal $s_i$ attendu pour un élément d'ordre i du réseau s'écrit comme le produit d'une amplitude par un terme de déphasage dû à la position spatiale dans le réseau du centre de phase de cet élément, cet élément $s_i$ est donné par la relation suivante, il s'agit d'une tension proportionnelle à des volts :

$$s_i\left( \vec{u}(k) \right) = a_i\left( \vec{u}(k) \right) \times \exp\left( 2\pi.j \frac{\vec{u}(k) \bullet \vec{OM_i}}{\lambda} \right) \qquad (1)$$

Le premier terme du second membre de l'égalité (1) caractérise la contribution de l'élément d'ordre i au gain total du réseau après mise en phase de toutes les contributions élémentaires. Le deuxième terme est le déphasage dû à la position de l'élément d'ordre i dans le réseau.

Le vecteur constitué par les signaux attendus élémentaires $s_i$ constitue $S(k)$ = vecteur des signaux attendus pour un signal provenant de la $k^{ième}$ direction de FFC. Ce vecteur de signal attendu est donné à un facteur multiplicatif près qui n'est pas significatif car il s'élimine par la suite. Seules sont significatives les valeurs relatives des éléments du vecteur les unes par rapport aux autres.

Dans la deuxième étape 42, on détermine le jeu du gain optimal pour une direction de scrutation par FFC donnée. Dans cette étape on détermine la maximalisation du rapport signal sur bruit ainsi que le signal sur bruit maximal atteignable.

La combinaison linéaire des sources élémentaires qui maximalise le Rapport Signal à Bruit en sortie de la sommation est donnée par la relation suivante :

$$Y = \boldsymbol{W}^H \boldsymbol{X} \quad \text{avec:} \boldsymbol{W} = \alpha.\boldsymbol{R}^{-1}\boldsymbol{S} \tag{2}$$

Le terme $Y$ est un scalaire homogène à des volts. Il peut s'écrire $Y = Ys + b$, où $Ys$ est le signal « utile » et $b$ est le bruit résiduel (fouillis + bruit). Le rapport Signal à Bruit $SNR_{SORTIE}$ en sortie utilisé par la suite est donné par la relation suivante :

$$SNR_{SORTIE} = \frac{\|Ys\|^2}{E\{\|b\|^2\}} \tag{3}$$

On voit ainsi de manière triviale que la constante non-nulle $\alpha$ de la relation (2) est arbitraire et s'élimine dans l'expression du rapport signal sur bruit SNR. En revanche, en étant une fonction de $S$ (c'est-à-dire de la direction d'observation), elle peut être utilisée à des fins de normalisation : on peut, par exemple :

- faire en sorte, qu'à flux incident donné, l'amplitude de signal reçu soit indépendante de la direction d'arrivée dans le domaine de scrutation lorsque la direction d'arrivée coïncide exactement avec l'une des $P$ directions de scrutation, c'est-à-dire lorsque : $\boldsymbol{X} = \boldsymbol{S}(k)$, $\forall k \in [1,P]$.

- ou faire en sorte que le bruit en sortie soit indépendant de la direction de FFC, donc de $S$.

Le jeu de coefficients de gain $w_i(\vec{u}(k))$ à déterminer a notamment pour but d'attribuer plus de « poids » aux éléments captant une puissance élevée de signal de part leurs positions dans le réseau et de mettre à l'inverse un poids faible aux éléments captant une faible puissance du signal.

Cette formation optimale est en réalité un filtre adapté spatial.

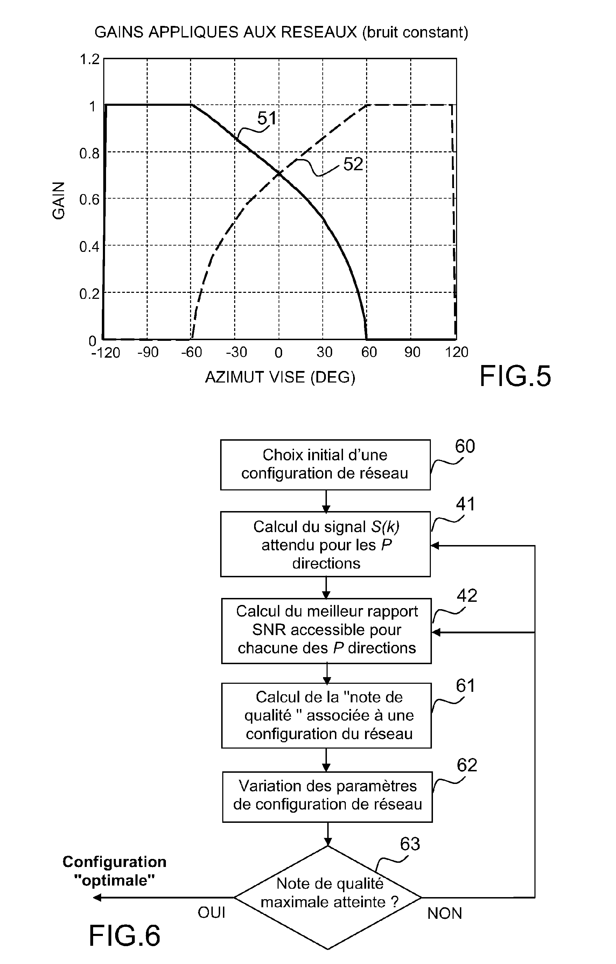

La figure 5, montre dans le cas d'un réseau en dièdre, comment varient les gains associés aux deux réseaux, par exemple gauche et droite, en fonction de la direction de FFC, à bruit constant. Un fort poids est appliqué aux éléments susceptibles de contribuer beaucoup au signal total reçu, alors qu'un faible poids, voire nul, est appliqué aux éléments susceptibles de ne contribuer que faiblement au signal total, mais susceptible de contribuer au bruit total. Une première courbe 51 représente le gain appliqué à un premier réseau, par exemple le réseau droit, et une deuxième courbe 52 représente le gain appliqué au deuxième réseau, par exemple le réseau gauche, en fonction de l'angle d'azimut.

Dans le cas général, le signal sur bruit SNR en sortie du formateur de voie est donné par la relation suivante :

$$SNR_{FFC}(\boldsymbol{X},\boldsymbol{S}) = \frac{\left|\left(\boldsymbol{R}^{-1}\boldsymbol{S}\right)^H \boldsymbol{X}\right|^2}{\left|\boldsymbol{S}^H \boldsymbol{R}^{-1}\boldsymbol{S}\right|} \tag{4}$$

Cette relation sert notamment, en faisant varier la direction d'arrivée du signal, donc en faisant varier $X$, à calculer le diagramme d'antenne équivalent. Si $X = S$, cas du filtre adapté, le SNR maximal est alors donné par la relation :

$$SNR_{\max}(\boldsymbol{S}) = \left| \boldsymbol{S}^{H} \boldsymbol{R}^{-1} \boldsymbol{S} \right| \qquad (5)$$

La première forme d'onde traite uniquement les cibles sur bruit thermique. En faisant l'hypothèse qu'il n'y a pas d'interférence, la matrice $R$ est calculée a priori et vaut : $\boldsymbol{R} = \sigma^2\boldsymbol{I}$, où $\sigma^2$ est la puissance du bruit thermique sur une voie de réception, identique pour toutes les sources, et $I$ est la matrice identité de dimension $M$. Dans ces conditions :

$$\boldsymbol{R}^{-1} = \frac{1}{\sigma^2}\boldsymbol{I} \qquad (6)$$

Si $p_i(k)$ est la puissance individuelle reçue par le $i^{ème}$ élément provenant d'une source d'émission dans la $k^{ième}$ direction à scruter de façon telle, qu'elle corresponde au signal attendu $S(k)$, alors la relation (5) revient à calculer le quotient suivant, où on voit que toutes les puissances élémentaires ont été bien additionnées en puissance :

$$SNR_{\max}(\boldsymbol{S}(k)) = \frac{\sum_{i=1}^{M} p_i(k)}{\sigma^2} \qquad (7)$$

En d'autres termes, la somme $\sum_{i=1}^{M} p_i(k)$ représente la puissance maximale interceptée par l'antenne lorsque la source d'énergie provient de la $k^{ième}$ direction.

La figure 6 illustre la troisième étape 43 dans laquelle on effectue l'itération de l'optimisation notamment sur les étapes 41 et 42 décrites précédemment.

Dans une phase préliminaire 60, on effectue le choix d'une configuration de base du réseau 31, 32, 33. Cette configuration définie notamment la forme du réseau dans le plan d'azimut relatif au radar, polyèdre ou courbe par exemple. La configuration de base comporte aussi notamment un nombre d'éléments rayonnants par segments du réseau, avec un espacement d'origine entre ces éléments. La configuration définitive qui est déterminée à l'issue des différentes étapes conserve l'allure initiale, polyèdre ou courbe par exemple, les autres paramètres pouvant être modifiés.

Comme indiqué précédemment, dans la première étape 41 on calcule le vecteur de signal attendu. Une source à distance très grande par rapport au réseau est successivement positionnée dans les P directions de telle sorte que le flux de puissance au droit du réseau est constant et ne dépend pas de la direction.

Dans la deuxième étape 42, on effectue la sommation optimale, pour chacune des P directions précédentes, des signaux reçus par chaque élément de manière à maximaliser le rapport signal sur bruit SNR.

Dans une étape suivante 61 on calcule le facteur de qualité choisi pour l'optimisation.

Dans une étape suivante 62, on fait varier les paramètres du réseau. On peut ainsi faire varier l'angle de pliure $\Phi$ du dièdre 31, le nombre et les orientations des segments d'un polyèdre 31, 32, ainsi que la répartition des éléments rayonnants par segments. Cette liste de paramètres à faire varier n'est pas exhaustive. Les paramètres à faire varier ainsi que le pas de variation sont déterminés en fonction de contraintes mécanique et de coût notamment. Cette variation des paramètres peut être empirique et peut faire appel à l'expertise de l'homme du métier.

Dans une étape suivante 63, on détermine la configuration, parmi les configurations testées, qui maximalise le facteur de qualité. On reboucle sur les étapes 41, 42, selon la nature et l'emplacement des paramètres du réseau qui ont été modifiés, tant que le facteur de qualité maximal n'est pas atteint. La configuration du réseau est déterminée par le choix définitif de ses paramètres.

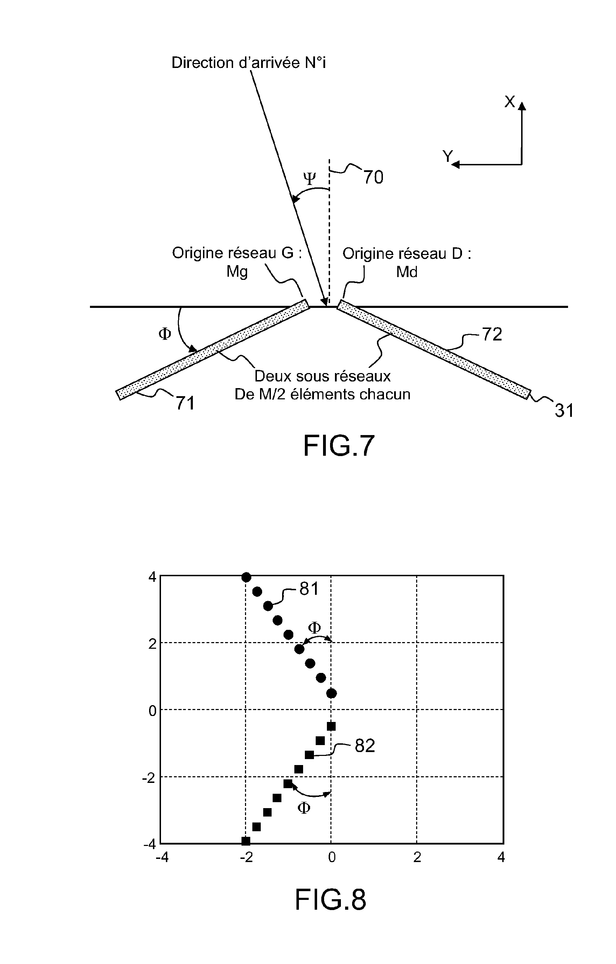

La figure 7 illustre un exemple d'optimisation avec un réseau 31 en forme de dièdre. Ce réseau 31 est formé de deux demi-réseaux 71, 72 ayant chacun M/2 éléments rayonnants et espacés l'un de l'autre d'une distance $\lambda/2$, $\lambda$ étant la longueur de l'onde reçue. La distance est prise entre l'origine Mg d'un sous-réseau 71, par exemple gauche, et l'origine Md de l'autre sous-réseau 72, droit.

Dans une première étape, on détermine le signal attendu.

En prenant comme référence le point O, milieu du segment [Mg, Md], tous les éléments d'un demi-réseau étant, par hypothèse, identiques, les vecteurs « signal attendu » des deux demi-réseaux 71, 72 peuvent être estimés en développant la relation (1). Cette méthode est toutefois assez simpliste, comme il a été indiqué précédemment, cette détermination pourrait être réalisée plus finement par simulation électromagnétique. Il s'agit ici d'une simple illustration de la méthode d'optimisation.

Les signaux attendus pour le sous-réseau gauche et du sous-réseau droit sont respectivement donnés par les relations (8) et (9) suivantes :

$$S_G(\psi) = a_G\left(\overrightarrow{u}\right) \times \sum_{i=1}^{M/2} \exp\left(2\pi.j \frac{\overrightarrow{u} \bullet \overrightarrow{OM}_{Gi}}{\lambda}\right) \quad \text{avec} \quad \overrightarrow{u} = \begin{pmatrix} \cos(\psi) \\ \sin(\psi) \end{pmatrix}$$

$$S_D(\psi) = a_D\left(\overrightarrow{u}\right) \times \sum_{i=1}^{M/2} \exp\left(2\pi.j \frac{\overrightarrow{u} \bullet \overrightarrow{OM}_{Di}}{\lambda}\right)$$

$\psi$ caractérisant une direction d'arrivée au point O, par exemple d'ordre i. $\psi$ est l'angle entre cette direction et l'axe de symétrie 70 du dièdre 31.

Dans cette formule, il s'agit de tensions et non de puissances.

Dans ces relations (8), (9), M est un entier pair puisque le réseau total de M éléments est divisé en deux sous-réseaux identiques. Les fonctions « $a_G$ » et « $a_D$ » caractérisent trois aspects :

1. Le « maître-couple » du réseau visible dans une direction, c'est-à-dire sa surface apparente. La variation de ce « maître-couple » se traduit par une variation de puissance reçue en $\cos(\psi-\phi)$ pour le réseau gauche et en $\cos(\psi+\phi)$ pour le réseau droite, $\phi$ étant l'angle de pliure.

2. La plage de fonctionnement angulaire d'un réseau. Cette plage est modélisée par la fonction suivante, $\theta_{MAX}$ étant l'angle maximal de dépointage par rapport à la normale au réseau :

$$\begin{array}{ll} 1 & \text{Si } |\psi - \phi| < \theta_{MAX} \\ 0 & \text{Sinon} \end{array} \qquad (10)$$

3. La directivité des sources élémentaires. Il est courant d'approcher cette variation de puissance reçue par le terme $\cos(\psi-\phi)^\eta$ pour le réseau gauche et en $\cos(\psi+\phi)^\eta$ pour le réseau droite, avec $\eta \approx 0.5$. En d'autres termes cette directivité varie en fonction du $\cos^\eta$ de l'angle par rapport à la normale au sous-réseau.

Les fonctions « $a_G$ » et « $a_D$ » des relations (8) et (9) sont finalement :

$$a_G(\psi,\phi) = \sqrt{\cos^{1+\eta}|\psi - \phi|} \quad si\left[|\psi - \phi| < \theta_{MAX}\right], \text{sinon } 0$$

$$a_D(\psi,\phi) = \sqrt{\cos^{1+\eta}|\psi + \phi|} \quad si\left[|\psi + \phi| < \theta_{MAX}\right], \text{sinon } 0$$

Dans une deuxième étape, on détermine la forme optimale du dièdre.

La figure 8 illustre les deux sous-réseaux 71, 72 du dièdre à optimiser, par la représentation de leurs éléments rayonnants 81, 82, le réseau 71, 72 étant représenté dans sa configuration de base. Dans cet exemple, l'ensemble comporte 18 éléments rayonnants, soit M = 18, chaque sous-réseau comportant M/2 = 9 éléments rayonnants. On cherche à trouver l'angle de pliure $\phi$ optimal du dièdre.

Le facteur de qualité utilisé ci-après est: $Q = \left(\prod_{k=1}^{P} \beta_k . Gain(\psi_k)\right)^{\frac{1}{P}}$, où $Gain(\psi_k)$ est le gain maximal dans la k$^{\text{ième}}$ direction et $\beta_k$ un terme de pondération qui vaut 2 si $|\psi_k| < 45°$, qui vaut 1 entre 45° et 110° et qui vaut 0 ailleurs. En d'autres termes, ce critère est :

- Eliminatoire si la couverture ne va pas jusqu'à +/-110°;

- Privilégie le gain dans un secteur de +/- 45°autour de l'axe.

Ceci n'est toutefois qu'un exemple de critère. D'autres critères sont tout à fait concevables.

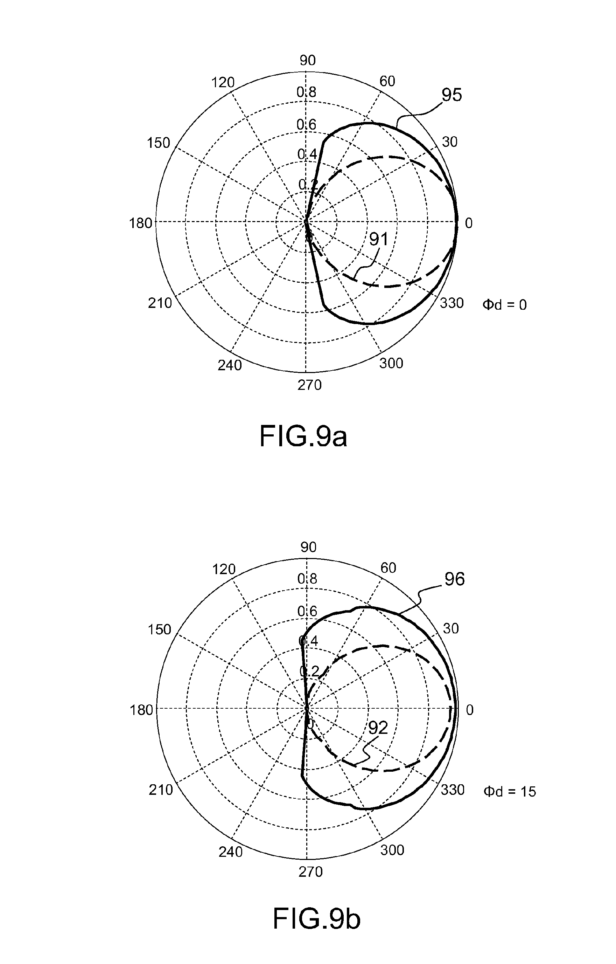

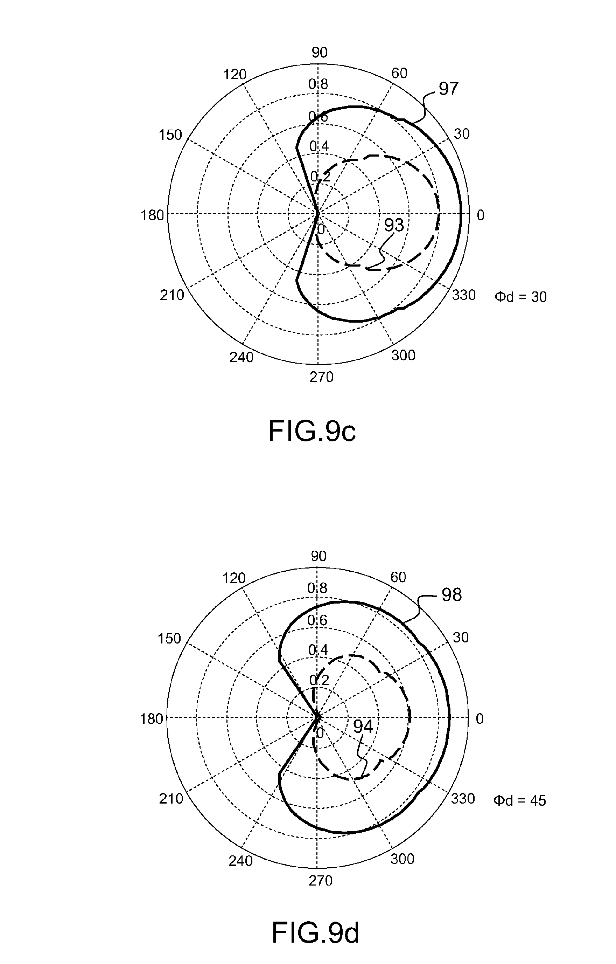

Pour 4 angles de pliure φ = 0°, 15°, 30° et 45°, on obtient les gains maximums illustrés respectivement par les figures 9a, 9b, 9c et 9d. Les gains maximum sont représentés par des diagrammes 91, 92, 93, 94 en représentation polaire « Gain/Azimut »..

La valeur 1 correspond à celle du gain du réseau à angle de pliure nul et dans l'axe. On a également fait figurer la racine quatrième de ce gain normalisé qui correspond à la portée relative accessible, par des diagrammes 95, 96, 97, 98, et pour une antenne d'émission couvrant à gain constant le domaine +/-110°.

Selon le critère précédent, l'angle de pliure nul est éliminatoire et la meilleure configuration se situe vers un angle de pliure autour de 30°. Ce résultat aurait été obtenu à l'aide du processus itératif décrit aux figures 4 et 6, en itérant le calcul des diagrammes des figures 9a, 9b, 9c et 9d sur l'angle de pliure.

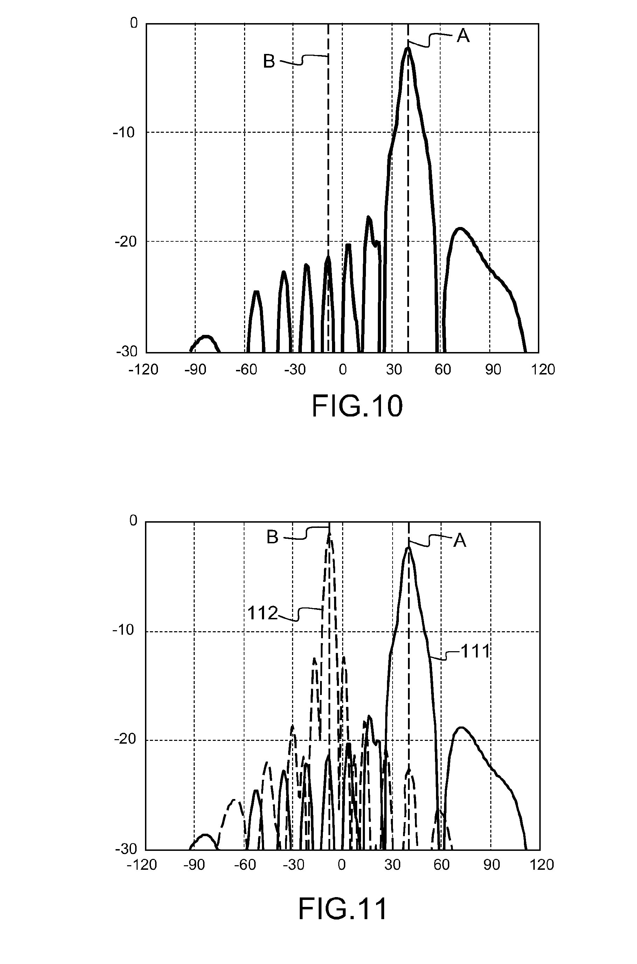

La figure 10 illustre un gain d'antenne normalisé en fonction de l'angle d'azimut, pour un réseau plan. L'optimisation précédente maximalise le gain sans aucune contrainte sur la qualité du diagramme de rayonnement en termes de lobes secondaires. A titre d'exemple, pour un angle de pliure de 30°, un espacement de λ entre les extrémités Mg et Md, et un pas entre éléments rayonnants 81, 82 par sous-réseau 71, 72, on obtient le diagramme illustré par la figure 10 pour une FFC optimisée à gain maximal et pour un angle de visée de 40°, direction A.

Un écho correspondant à une cible de SER (Surface Equivalente Radar) normale vis-à-vis de l'application considérée et située à distance moyenne ou grande ne pourra être détecté que si le lobe principal du faisceau formé en réception est dirigé vers cette cible, cas d'une cible dans la direction A dans l'exemple de la figure 10, c'est-à-dire si le rapport signal sur bruit S/B excède le seuil de détection. En revanche, le rapport S/B est insuffisant si cette même cible est située dans une direction B de la figure 10 vers -8°, le faisceau étant formé vers la direction A.

A l'opposé, une cible de forte SER, ou bien située à courte ou très courte distance, peut être détectée dans le lobe principal, mais aussi si elle est située dans la direction d'un lobe secondaire, cas d'une cible dans la direction B dans l'exemple de la figure 10, car le rapport S/B peut alors excéder le seuil de détection, même si le gain du lobe secondaire est faible (dans ce cas environ 20 dB inférieur au lobe principal). Sans traitement particulier, la cible est localisée à tort dans la direction du lobe principal.

La figure 11 illustre un exemple de solution. Un traitement selon l'invention fait l'hypothèse que la probabilité que deux ou plus échos détectables de cibles utiles ou non soient simultanément présents dans une cellule de résolution vitesse, distance ou distance-vitesse est négligeable. Pour une quantité donnée de cibles observables, le traitement fonctionne d'autant mieux que la forme d'onde est à haute résolution:

- soit en vitesse (Doppler) ;
- soit en distance ;
- soit dans les deux dimensions distance et vitesse.

On effectue la FFC de P faisceaux pour chaque cellule vitesse et/ou distance du domaine couvert par la forme d'onde utilisée. Cette formation de faisceaux est réalisée, de toutes manières, et indépendamment de la mise en oeuvre de l'invention.

Pour une cellule Vitesse et/ou Distance, on peut donc potentiellement avoir $p$ détections : $0 \leq p \leq P$.

Si $p \geq 2$, on ne retient que la formation de faisceau qui a donné lieu, dans la cellule de résolution donnée, au maximum absolu de puissance de signal : ceci signifie en effet que la direction de formation de ce faisceau est la plus proche de la direction réelle de la cible. Ceci est illustré par la figure 11 qui montre les FFC de deux faisceaux, l'un 111 vers 40° dans la direction A précédente, l'autre 112 vers -8°dans la direction B précédente.

Dans le cas d'un signal incident faible, celui-ci ne peut être détecté que lorsque le lobe principal d'une FFC est dirigé vers elle, sinon le rapport S/B serait trop faible pour permettre une détection par les lobes secondaires. Dans cette hypothèse, une cible vers 40° ne sera dé tectée que sur la FFC formée vers 40° représentée par une première courbe 111 et une cible vers - 8° ne sera détectée que sur la FFC formée vers -8° représentée par une deuxième courbe 112. Il n'y a donc pas d'ambiguïté sur la localisation angulaire d'une cible faible pourvu que la différence de niveau entre le lobe principal et les lobes secondaires excède significativement le rapport S/B correspondant au seuil de détection (usuellement de 5 à 10 dB pour les probabilités de fausse alarme « usuelles » et des traitements de détection courants). Dans l'exemple de la figure 11 cette différence de niveau est de l'ordre de 20 dB, donc satisfait le précédent critère.

Dans l'autre cas, où le signal incident est puissant, il est détecté lorsqu'une FFC est dirigée par son lobe principal sur lui, mais aussi lorsqu'une autre FFC dirige un lobe secondaire vers cet écho. Par exemple, si un écho est situé à -8°, direction B, et excède de 20 dB le S/B de détection sur la FFC vers -8°, il sera détecté après cette FFC, mais aus si par toutes les autres FFC où le niveau relatif de lobes secondaires excède 20 dB (en valeur absolue). En revanche, la bonne direction A est donnée par la FFC où l'on observe le maximum de signal. Les autres détections plus faibles observées sur les autre FFC sont rejetées : c'est pour cette raison que le traitement n'élimine pas à tort des détections utiles, à la condition que la probabilité d'avoir deux ou plus de cibles par cellule de résolution Distance-Vitesse est négligeable. Ceci est notamment le cas de la 1ère forme d'onde employée dans la zone Doppler de bruit thermique.

Le fait que tous les signaux issus de P faisceaux formés par calcul utilisent tous le même vecteur d'échantillons de signal rend le procédé indépendant des fluctuations de niveau des cibles puisque toutes les FFC utilisent le même jeu de signaux au même instant.

Une fois la bonne FFC identifiée, il est possible de réaliser l'équivalent d'un traitement d'écartométrie monopulse en utilisant les lobes formés par les FFC adjacentes. On peut par exemple utiliser le lobe où le signal est maximum et l'un des deux lobes adjacent où le signal est le plus proche du maximum. De la sorte, on peut très simplement former localement par calcul une voie somme $\Sigma$ et une voie différence $\Delta$, puis utiliser un principe d'écartométrie connu de l'homme du métier.

La solution précédemment décrite présente l'intérêt de ne rajouter qu'une quantité de traitement marginale par rapport à une solution nécessitée de manière inévitable par la FFC de P faisceaux dans P directions. De plus, elle n'impacte pas la sensibilité de la détection puisque qu'elle opère sur les signaux issus des faisceaux formés et non sur les signaux issus des sources élémentaires, voire de sous réseaux, où le rapport S/B est forcément plus faible et où la prise de décision « Vrai cible dans la bonne direction ou fantôme vu par un lobe secondaire », à probabilité de fausse décision très faible, devient délicate.

La solution proposée est applicable dans la zone Doppler de bruit thermique dans laquelle la quantité d'échos utiles ou non, dont les niveaux les rendent détectables, est en nombre limité. Elle est difficilement applicable à la zone de fouillis si les échos de fouillis de niveau suffisant sont en grand nombre.

Pour ces raisons, le traitement proposé est avantageusement destiné à être utilisé avec la première forme d'onde pour cibles rapides « sur bruit thermique » là où justement on cherche une grande portée, donc une grande sensibilité

## Revendications

**1.** Système radar comportant au moins des moyens de traitement, une antenne d'émission et une antenne de réception formée d'un réseau (31, 32, 33) d'éléments rayonnants (10), la configuration du réseau étant **caractérisée par** un jeu de paramètres déterminant sa forme géométrique, le nombre d'éléments rayonnants et le pas entre les éléments rayonnants, le diagramme de rayonnement de ladite antenne est déterminé pour maximiser le gain d'antenne, la configuration du réseau étant définie selon les étapes suivantes :

- dans une étape préliminaire (60), une configuration de base dudit réseau est choisie ;
- dans une première étape (41) on détermine le signal attendu d'une cible dans lesdites P directions ;
- dans une deuxième étape (42) on détermine la sommation, pour chacune desdites P directions, des signaux reçus par chaque élément rayonnant (10) de façon à maximaliser le rapport signal sur bruit en sortie de ladite sommation ;
- dans une troisième étape (61) on calcule un facteur de qualité fonction des rapports signal sur bruit (S/ B) reçus sur lesdites P directions
- dans une quatrième étape (62) on fait varier les paramètres du réseau.
- dans une étape suivante (63), on détermine la configuration définitive comme étant celle, parmi les configurations testées, qui maximalise le facteur de qualité, les étapes précédentes étant réitérées tant que le facteur de qualité maximal n'est pas atteint ;

ledit système étant **caractérisé en ce que** les faisceaux d'antenne étant calculés dans P directions par une fonction de FFC :

- les possibles détections d'une cible par les lobes secondaires d'un ou plusieurs faisceaux formés par FFC sont traitées par les moyens de traitement par un algorithme basé sur la comparaison des niveaux de puissance des échos captés par lesdits faisceaux reçus dans une cellule de résolution distance-vitesse du radar, une seule détection au maximum n'étant possible par cellule de résolution distance-vitesse ;
- les moyens de traitement utilisent l'hypothèse qu'il ne peut exister de manière probable plus d'un écho de rapport signal sur bruit (S/B) suffisant pour qu'il soit détectable, pour une cellule de résolution donnée du radar, soit en vitesse, soit en distance ou soit en distance-vitesse selon le traitement mis en oeuvre ;
- s'il y a plus d'un écho détectable par cellule de résolution parmi la pluralité de faisceaux formés par FFC, seul est considéré valide l'écho et la FFC qui procurent le maximum de puissance ou le maximum de rapport signal sur bruit (S/B).

**2.** Système radar selon la revendication 1, **caractérisé en ce que** la configuration de base du réseau est un polyèdre (31, 32) dans le plan d'azimut relatif au radar.

3. Système radar selon la revendication 2, **caractérisé en ce que** la configuration de base du réseau est un dièdre (31) dans leplan d'azimut relatif au radar.

4. Système radar selon la revendication 1, **caractérisé en ce que** la configuration de base du réseau est une courbe continue (33) dans le plan d'azimut relatif au radar.

5. Système radar selon l'une quelconque des revendications précédentes, **caractérisé en ce que** le facteur de qualité est fonction d'un critère de régularité angulaire du gain d'antenne de réception ou rapport signal sur bruit reçu sur une plage angulaire donnée.

6. Système radar selon la revendication 5, **caractérisé en ce que** le facteur de qualité est en outre fonction de conditions éliminatoires n'assurant pas une couverture minimale de certaines directions dans le domaine de détection radar.

7. Système radar selon l'une quelconque des revendications précédentes, **caractérisé en ce que** la direction angulaire (A) de la cible est obtenue par une technique de type monopulse, la direction précise étant fonction du signal reçu dans le lobe de FFC où le maximum de signal a été observé et sur au moins l'un des lobes adjacents.

8. Système radar selon l'une quelconque des revendications précédentes, **caractérisé en ce que** la direction angulaire précise de la cible est obtenue par une technique de type monopulse en utilisant deux lobes FFC (111, 112), le lobe (111) où le signal reçu est maximum et le lobe (112) à proximité immédiate où le signal est de puissance juste inférieure au maximum.

9. Système radar selon l'une quelconque des revendications précédentes, **caractérisé en ce qu'**il équipe un aéronef pour assurer une fonction d'évitement d'obstacle.

10. Système radar selon la revendication 9, **caractérisé en ce que** l'aéronef est autopiloté.


**Patentansprüche**

1. Radarsystem, umfassend mindestens Verarbeitungsmittel, eine Sendeantenne und eine Empfangsantenne, gebildet aus einem Netz (31, 32, 33) von Strahlungselementen (10), wobei die Konfiguration des Netzes durch einen Satz von Parametern gekennzeichnet ist, der seine geometrische Form, die Anzahl der Strahlungselemente und den Schritt zwischen den Strahlungselementen bestimmt, wobei das Diagramm der Strahlung bestimmt ist, um die Antennenverstärkung zu maximieren, wobei die Konfiguration des Netzes gemäß den folgenden Schritten definiert ist:

- in einem einleitenden Schritt (60) wird eine grundlegende Konfiguration des Netzes ausgewählt;
- in einem ersten Schritt (41) wird das Signal bestimmt, das von einem Ziel in den P Richtungen erwartet wird;
- in einem zweiten Schritt (42) wird die Summierung für jede der P Richtungen, der Signale bestimmt, die von jedem Strahlungselement (10) erhalten werden, um das Signal-Rausch-Verhältnis am Ausgang der Summierung zu maximieren;
- in einem dritten Schritt (61) wird ein Qualitätsfaktor als Funktion der Signal-Rausch-Verhältnisse (S/B) berechnet, die in den P Richtungen erhalten werden,
- in einem vierten Schritt (62) werden die Parameter des Netzes variiert;
- in einem folgenden Schritt (63) wird die definitive Konfiguration als diejenige unter den getesteten Konfigurationen bestimmt, die den Qualitätsfaktor maximiert, wobei die vorhergehenden Schritte wiederholt werden, bis der maximale Qualitätsfaktor erreicht ist;

wobei das System **dadurch gekennzeichnet ist, dass** die Antennenstrahlen in P Richtungen durch eine FFC-Funktion berechnet werden:

- die möglichen Nachweise eines Ziel durch die sekundären Keulen von einem oder von mehreren Strahlen, gebildet von FFC, werden von den Verarbeitungsmitteln durch einen Algorithmus auf der Grundlage des Vergleiches der Leistungsniveaus der Echos verarbeitet, die von den Strahlen erfasst werden, die in einer Zelle zur Weg-/Geschwindigkeits-Auflösung des Radars empfangen werden, wobei maximal ein einzelner Nachweis pro Zelle zur Weg-/Geschwindigkeits-Auflösung nicht möglich ist.
- die Verarbeitungsmittel verwenden die Hypothese, dass wahrscheinlich nicht mehr als ein Echo des Signal-Rausch-Verhältnisses (S/B), das ausreichend ist, damit es nachgewiesen werden kann, für eine gegebene Auflösungszelle des Radars, entweder hinsichtlich der Geschwindigkeit oder des Wegs oder der Weg-/Geschwindigkeit gemäß der durchgeführten Verarbeitung vorhanden sein kann;

- wenn mehr als ein Echo pro Auflösungszelle aus der Vielzahl von Strahlen, gebildet von FFC, nachgewiesen werden kann, wird nur das Echo und die FFC, die die maximale Leistung oder das maximale Signal-Rausch-Verhältnis (S/B) bereitstellen, in Betracht gezogen.

2. Radarsystem nach Anspruch 1, **dadurch gekennzeichnet, dass** die grundlegende Konfiguration des Netzes ein Polyeder (31, 32) in der Azimutebene mit Bezug auf den Radar ist.

3. Radarsystem nach Anspruch 2, **dadurch gekennzeichnet, dass** die grundlegende Konfiguration des Netzes ein Dieder (31) in der Azimutebene mit Bezug auf den Radar ist.

4. Radarsystem nach Anspruch 1, **dadurch gekennzeichnet, dass** die grundlegende Konfiguration des Netzes eine kontinuierliche Kurve (33) in der Azimutebene mit Bezug auf den Radar ist.

5. Radarsystem nach einem der vorhergehenden Ansprüche, **dadurch gekennzeichnet, dass** der Qualitätsfaktor eine Funktion eines Kriteriums der Winkelregelmäßigkeit einer Verstärkung der Aufnahmeantenne oder des Signal-Rausch-Verhältnis, erhalten auf einem gegebenen Winkelbereich, ist.

6. Radarsystem nach Anspruch 5, **dadurch gekennzeichnet, dass** der Qualitätsfaktor außerdem eine Funktion von eliminatorischen Bedingungen sind, die keine minimale Abdeckung von bestimmten Richtungen in der Nachweisdomäne des Radars sicherstellen.

7. Radarsystem nach einem der vorhergehenden Ansprüche, **dadurch gekennzeichnet, dass** die Winkelrichtung (A) des Ziels durch eine Technik vom Typ Monopuls erhalten wird, wobei die genaue Richtung eine Funktion des Signals ist, das in der Keule des FFC, in der das maximale Signal beobachtet wurde, und auf mindestens einer der benachbarten Keulen erhalten wird.

8. Radarsystem nach einem der vorhergehenden Ansprüche, **dadurch gekennzeichnet, dass** die präzise Winkelrichtung des Ziels durch eine Technik vom Typ Monopuls unter Verwendung von zwei FFC-Keulen FFC (111, 112) erhalten wird, der Keule (111), in der das erhaltene Signal maximal ist, und der Keule (112) in unmittelbarer Nähe, in der das Signal eine Leistung aufweist, die gerade unter dem Maximum liegt.

9. Radarsystem nach einem der vorhergehenden Ansprüche, **dadurch gekennzeichnet, dass** es ein Luftfahrzeug ausstattet, um eine Funktion zur Vermeidung eines Hindernisses sicherzustellen.

10. Radarsystem nach Anspruch 9, **dadurch gekennzeichnet, dass** das Luftfahrzeug mit Autopilot geführt wird.

**Claims**

1. A radar system comprising at least processing means, an emission antenna and a reception antenna formed by an array (31, 32, 33) of radiating elements (10), the configuration of said array being **characterised by** a set of parameters that determine its geometric shape, the number of radiating elements and the step between the radiating elements, the radiating pattern of said antenna being determined to maximise the antenna gain, the configuration of said array being defined according to the following steps:

- a first preliminary step (60) of selecting a basic configuration of said array;
- a first step (41) of determining the expected signal of a target in said directions P;
- a second step (42) of determining the addition, for each of said directions P, of the signals received by each radiating element (10) so as to maximise the signal-to-noise ratio at the output of said addition;
- a third step (61) of computing a quality factor as a function of the signal-to-noise ratios (S/N) received on said directions P;
- a fourth step (62) of varying the parameters of said array;
- a next step (63) of determining the definitive configuration as being that which, among the tested configurations, maximises the quality factor, the preceding steps being repeated as long as the maximum quality factor is not reached;

said system being **characterised in that**, with the antennae beams being computed in directions P by an ABF function:

- the possible detections of a target by the secondary lobes of one or more beams formed by ABF are processed by said processing means using an algorithm that is based on comparing the power levels of the echoes detected by said received beams in a distance-speed resolution cell of the radar, with at most one detection not being possible per distance-speed resolution cell;
- said processing means use the hypothesis that it is unlikely that more than one echo of the signal-to-noise ratio (S/N) can exist that is big enough for it to be detectable, for a given resolution cell of said radar, either by speed, by distance or by distance-speed, depending on the processing that is implemented;
- if there is more than one detectable echo per resolution cell among the plurality of beams formed by ABF, only the echo and ABF procuring the maximum power or the maximum signal-to-noise ratio (S/N) are considered to be valid.

2. The radar system according to claim 1, **characterised in that** said basic configuration of said array is a polyhedron (31, 32) in the azimuth plane relative to the radar.

3. The radar system according to claim 2, **characterised in that** said basic configuration of said array is a dihedral (31) in the azimuth plane relative to the radar.

4. The radar system according to claim 1, **characterised in that** said basic configuration of said array is a continuous curve (33) in the azimuth plane relative to the radar.

5. The radar system according to any one of the preceding claims, **characterised in that** the quality factor is a function of an angular regularity criterion of the reception antenna gain or of the signal-to-noise ratio received on a given angular range.

6. The radar system according to claim 5, **characterised in that** the quality factor is also a function of eliminatory conditions that do not provide a minimum coverage of certain directions in the radar detection field.

7. The radar system according to any one of the preceding claims, **characterised in that** the angular direction (A) of the target is obtained by a technique of the monopulse type, the precise direction being a function of the signal received in the ABF lobe where the maximum signal has been observed and on at least one of the adjacent lobes.

8. The radar system according to any one of the preceding claims, **characterised in that** the precise angular direction of the target is obtained by a technique of the monopulse type using two ABF lobes (111, 112), the lobe (111) where the received signal is maximum and the lobe (112) in the immediate vicinity where the power of the signal is just below the maximum.

9. The radar system according to any one of the preceding claims, **characterised in that** it equips an aircraft in order to provide an obstacle avoidance function.

10. The radar system according to claim 9, **characterised in that** said aircraft is autopiloted.

FIG.1

FIG.2

31 〜

Φ

32

33

Dièdre     Trièdre     Courbe continue

## FIG.3

| Détermination du signal attendu | 41 |

| Détermination du jeu de gain optimal pour une direction de scrutation par FFC donnée | 42 |

| Itération de l'optimisation | 43 |

## FIG.4

GAINS APPLIQUES AUX RESEAUX (bruit constant)

FIG.5

Choix initial d'une configuration de réseau — 60

Calcul du signal *S(k)* attendu pour les *P* directions — 41

Calcul du meilleur rapport SNR accessible pour chacune des *P* directions — 42

Calcul de la "note de qualité " associée à une configuration du réseau — 61

Variation des paramètres de configuration de réseau — 62

63

**Configuration "optimale"**

Note de qualité maximale atteinte ?

OUI          NON

FIG.6

Direction d'arrivée N°i

X

Y

Ψ 70

Origine réseau G :
Mg

Origine réseau D :
Md

Φ

72

Deux sous réseaux
De M/2 éléments chacun

71

31

## FIG.7

81

Φ

82

Φ

## FIG.8

FIG.9a

FIG.9b

FIG.9c

FIG.9d

FIG.10

FIG.11

**RÉFÉRENCES CITÉES DANS LA DESCRIPTION**

**Documents brevets cités dans la description**

- FR 0904395
- FR 0904224
- FR 0904394
- FR 0904880

**Littérature non-brevet citée dans la description**

- **STÉPHANE KEMKEMIAN.** A MIMO Radar for Sense and Avoid Function - A fully static solution for UAV. *IRS 2010,* 17 Juin 2010